(19) Europäisches Patentamt
European Patent Office
Office européen des brevets

(11) **EP 4 011 999 A1**

(12) **EUROPEAN PATENT APPLICATION**
published in accordance with Art. 153(4) EPC

(43) Date of publication:
**15.06.2022 Bulletin 2022/24**

(21) Application number: **21790757.5**

(22) Date of filing: **07.06.2021**

(51) International Patent Classification (IPC):
**C09J 103/02** (2006.01)   **C09J 11/00** (2006.01)
**C08K 5/05** (2006.01)

(86) International application number:
**PCT/KR2021/007052**

(87) International publication number:
**WO 2022/092473 (05.05.2022 Gazette 2022/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.11.2020 KR 20200144030
02.06.2021 KR 20210071259**

(71) Applicant: **LINKFLIX, INC
Nam-gu, Busan 48548 (KR)**

(72) Inventor: **KIM, Doo Il
Dong-gu, Busan 48725 (KR)**

(74) Representative: **Kurig, Thomas
Becker Kurig & Partner
Patentanwälte mbB
Bavariastraße 7
80336 München (DE)**

(54) **ECO-FRIENDLY BIODEGRADABLE ADHESIVE COMPOSITION**

(57)    The present disclosure relates to an adhesive composition containing a saccharide compound and a polyol compound, and a method for producing the same, and is capable of water separation and biodegradation while having excellent adhesive force. The substrate to which the adhesive composition is applied can be easily and completely removed from the adherend even in pure water. In addition, it is an eco-friendly adhesive composition that is safe for people, animals, fish, and freshwater organisms when the adhesive is removed, maintains a healthy natural ecosystem without toxicity and damage to soil, water quality, and green plants, and does not cause any concern about secondary environmental pollution.

[FIG. 1]

EP 4 011 999 A1

**Description**

**TECHNICAL FIELD**

The present disclosure relates to an eco-friendly biodegradable adhesive composition using a naturally derived material as an active ingredient, and more particularly, to an eco-friendly biodegradable adhesive composition containing a naturally derived saccharide compound and a polyol compound as an active ingredient, and a method for producing the same.

**BACKGROUND ART**

An organic solvent derived from petroleum may be used during a production process to improve the adhesive force during production of a gluing agent, which is a material used to attach an object to the surface of another object. Accordingly, there may be a problem of impairing the health of users and polluting the environment, such as atmospheric gas generation and waste water discharge during production. In addition, most gluing agents are difficult to decompose naturally because monomer units are covalently bonded, and environmental pollution problems are emerging, even with polymers that have not been decomposed in this manner.

In conventional water-separable gluing agents, high temperature and alkaline conditions are required to effectively remove the gluing agent adhered to the adherend and the substrate, and additional energy resource consumption is required. In addition, when the gluing agent material attached to the adherend or the substrate is removed by water separation, if the gluing agent raw material molecules are discharged into the environment, it may cause additional secondary environmental pollution problems. For this reason, it is necessary to effectively remove the gluing agent from the adherend and to develop a technology for an eco-friendly natural gluing agent that can be safely biodegradable.

However, natural gluing agents have disadvantages of non-uniformity in quality and low adhesive force. Accordingly, there is a need for a gluing agent that is harmless to the human body and is biodegradable and thus does not cause environmental pollution while having high adhesive force and uniform quality.

In addition, parts bonded with adhesives are difficult to dismantle and separate, resulting in the mass-production of products that are difficult to recycle, which is an obstacle to conservation of resources of materials. Accordingly, if the parts bonded with adhesives can be easily separated as needed, recycling of materials can be increased and environmental pollution can be reduced. Therefore, as demand for the development of an easy-to-peel adhesive is increasing all over the world, it is possible to actively respond to the requirements of various global environmental regulations.

**DISCLOSURE OF INVENTION**

**TECHNICAL PROBLEM**

The present inventors have developed an adhesive composition that does not require the use of hazardous substances such as sodium hydroxide when separated from the adherend, as it is soluble in water, and is biodegradable upon release by using natural, starch-based, and edible starch-based materials as raw materials. As a result, the inventors invented an adhesive composition with added saccharide compounds such as dextrin, and identified excellent adhesive force and water-separability effect when applied to paper, MDF plywood (wood), pebbles, sand, gypsum board and brick of miniature parts, diorama and DIY, paper craft, bead craft and the like.

Accordingly, an aspect of the present disclosure is directed to providing an eco-friendly adhesive composition containing a saccharide compound and a polyol compound as an active ingredient, and a method for producing the same.

**SOLUTION TO PROBLEM**

One aspect of the present disclosure is directed to providing an eco-friendly adhesive composition, wherein the adhesive composition may include a saccharide compound, a polyol compound, and a solvent for dispersing the saccharide compound and the polyol compound.

Throughout the specification, the term "gluing properties" or "adhesive properties" refers to a phenomenon in which two objects (except for gases) are close to each other and a force (or work) is required to separate the two objects by pulling thereafter. If required, some materials having gluing properties or adhesive properties may be solidified after a given period of time after being applied to a substrate. When such a gluing agent/adhesive is separated from the substrate, irreversible physical destruction may occur. In addition, the term "gluing properties" or "adhesive properties" may include "viscoelasticity" which requires force on viscoelastic deformation when the gluing/adhesive material is separated from the substrate. A gluing/adhesive composition having viscoelastic properties may be stored and distributed after pre-treatment before being applied to the substrate. Thus, adhesive forces thereof may be maintained after a certain period of time.

Examples of gluing/adhesive articles prepared by applying the gluing/adhesive composition to a substrate and drying the composition may include labels and oriented polypropylene (OPP) tapes. By using the gluing properties, reversible attachment and detachment may be possible. By applying the gluing composition to the substrate and drying the composition, a gluing layer having viscoelasticity is formed on the substrate. The substrate may be any adherend commonly used in the art to which the adhesive composition is applicable. The substrate may be, for example, a polymer film. As the polymer film, for example, a polyolefin film such as polyethylene, polypropylene, an ethylene/propylene copolymer, polybutene-1, an ethylene/vinyl acetate copolymer, a polyethylene/styrenebutadiene rubber mixture, or a polyvinylchloride film may be used. In addition, a plastic material such as polyethyleneterephthalate, polycarbonate, and poly (methylmethacrylate) or a thermoplastic elastomer such as polyurethane, and a polyamide-polyol copolymer, and any mixture thereof may be used.

The adhesive composition according to the present disclosure has water separability. Thus, when the adhesive composition of the present disclosure is used as an adhesive, the adhesive is dissociated from the substrate or adherend to which the adhesive is applied by water, and thereby easily separated and removed therefrom. Particularly, the adhesive applied to the substrate or adherend may be dissociated within 2 hours, particularly, within 30 minutes, or more particularly, within 10 minutes above room temperature (25°C) using water according to the adhered substrate. The adhesive composition of the present disclosure is easily dissociated by water and dissociated components are also environmentally friendly since they are not harmful to living organisms and the environment.

In one embodiment of the present disclosure, the saccharide compound may be a monosaccharide or a polysaccharide. The saccharide compound may provide an adhesive composition with viscosity and gluing properties.

The monosaccharide may be at least one selected from the group consisting of etythrose, threose, ribose, ribulose, xylose, xylulose, lyxose, allose, altrose, fructose, galactose, glucose, gulose, idose, mannose, sorbose, talose, tagatose, sedoheptulose, and mannoheptulose.

The polysaccharide is a compound that is composed of multi saccharides. The polysaccharide may be at least one selected from the group consisting of sucrose, glucose, maltose, lactose, trehalose, turanose, cellobiose, raffinose, melezitose, maltotriose, acarbose, stachyose, fructooligosaccharide, galactooligosaccharide, cellulose, dextrin, and glycogen. For example, according to a preferred embodiment of the present disclosure, the saccharide compound may be selected as dextrin. Dextrin is relatively soluble in water, so it is easy to process, and it has excellent gluing properties and viscosity, so it is suitable for adhesion.

In one embodiment of the present disclosure, the polyol compound may provide adhesive force and water resistance to the adhesive composition. The polyol compound is a compound having two or more hydroxyl groups, and the polyol compound may be at least one selected from the group consisting of 1,2-hexanediol, 1,2-octanediol, 1,2-decanediol, 1,6-hexanediol, 1,8-octanediol, 1,3-butanediol, 4,4'-dihydroxyphenylpropane, 4,4'-dihydroxymethylmethane, diethylene glycol, triethylene glycol, polyethylene glycol (PEG), dipropylene glycol, polytetramethylene glycol (PTMG), polypropylene glycol (PPG), 1,4-cyclohexanedimethanol, 1,4-cyclohexanediol, glycerin, ethylhexylglycerin, and sorbitol.

The polyol compound may select a plurality of materials listed above. In other words, the polyol compound may be a mixture composed of a plurality of materials. As for the mixing composition of the polyol compound, an optimal material may be selected according to the required adhesive performance of the adhesive composition. For example, as the polyol compound according to an embodiment of the present disclosure, 1,2-hexanediol, 1,3-butanediol, glycerin, and ethylhexylglycerin may be selected.

The adhesive composition may include 50 to 70% by weight of the saccharide compound, 5 to 15% by weight of the polyol compound, and a balance of the solvent.

When the content of the saccharide compound is less than 50% by weight, the viscosity and gluing properties of the adhesive composition may be lowered. When the content exceeds 70% by weight, the improvement in viscosity and gluing properties may not appear relative to the amount added. On the other hand, when the content of the polyol compound is less than 5% by weight, water resistance and crosslinking rate are lowered. When the content exceeds 15% by weight, stability in the composition in relation to other components may be reduced. Distilled water may be used as solvent, and a balance of the solvent may be used with respect to the content of the components. The solvent may provide a function of dispersing the components and maintaining the viscosity between the components.

In one embodiment of the present disclosure, the pH of the adhesive composition is 5 to 11, specifically 5 to 9.5, more specifically 5 to 8.5. The adhesive composition having such a pH range has excellent storage stability and storage stability, and even if stored for a lengthy time, there may be no change in formulation or quality. The adhesive composition has excellent adhesion and does not form precipitation even when used immediately after being produced as well as used after long-term storage.

In one embodiment of the present disclosure, there is provided an eco-friendly adhesive produced from the adhesive composition. Such adhesive may be in the form of hydrogels, mats, films or patches.

According to another embodiment of the present disclosure, in the method for producing an eco-friendly adhesive composition, the method for producing the adhesive composition includes:

S1) adding a saccharide compound to a solvent and stirring to form a mixture; and
S2) mixing a polyol compound with the mixture to form an adhesive composition.

In one embodiment of the present disclosure, in operation S1), after raising the temperature of the solvent to 50 to 70°C, the saccharide compound is added to the solvent and mixed by stirring. When the operation is carried out outside the above temperature range, side reaction materials and impurities may be formed. In some cases, it may be difficult to obtain an adhesive composition having a desired adhesive properties.

In one embodiment of the present disclosure, an amino acid compound may be further added to the mixture or the adhesive composition. The amino acid compound may be at least one selected from the group consisting of glycine, alanine, phenylalanine, valine, leucine, isoleucine, lysine, proline, serine, threonine, tryptophan, histidine, tyrosine, arginine, asparagine, aspartic acid, aspartame, glutamine and glutamic acid. The amino acid compound may improve the adhesive strength of the adhesive film formed by the adhesive composition. In addition, it is possible to suppress the occurrence of swelling due to moisture to improve water resistance.

In one embodiment of the present disclosure, the saccharide compound may be a monosaccharide or a polysaccharide. The saccharide compound may provide an adhesive composition with viscosity and gluing properties.

The monosaccharide may be at least one selected from the group consisting of etythrose, threose, ribose, ribulose, xylose, xylulose, lyxose, allose, altrose, fructose, galactose, glucose, gulose, idose, mannose, sorbose, talose, tagatose, sedoheptulose, and mannoheptulose.

The polysaccharide is a compound that is composed of multi saccharides. The polysaccharide may be at least one selected from the group consisting of sucrose, glucose, maltose, lactose, trehalose, turanose, cellobiose, raffinose, melezitose, maltotriose, acarbose, stachyose, fructooligosaccharide, galactooligosaccharide, cellulose, dextrin, and glycogen.

In one embodiment of the present disclosure, the polyol compound may provide adhesive force and water resistance to the adhesive composition. The polyol compound is a compound having two or more hydroxyl groups, and the polyol compound may be at least one selected from the group consisting of 1,2-hexanediol, 1,2-octanediol, 1,2-decanediol, 1,6-hexanediol, 1,8-octanediol, 1,3-butanediol, 4,4'-dihydroxyphenylpropane, 4,4'-dihydroxymethylmethane, diethylene glycol, triethylene glycol, polyethylene glycol (PEG), dipropylene glycol, polytetramethylene glycol (PTMG), polypropylene glycol (PPG), 1,4-cyclohexanedimethanol, 1,4-cyclohexanediol, glycerin, ethylhexylglycerin, and sorbitol.

In another aspect of the present disclosure, there is provided a method of attaching a first substrate and a second substrate, wherein the method includes: applying the adhesive composition to the first substrate to bond the adhesive composition to the first substrate; and contacting the first substrate to which the composition is bonded with the second substrate to attach the first substrate and the second substrate to each other. The first substrate may be MDF plywood, paper, wood, brick, gravel, or the like, and the second substrate may be MDF plywood, paper, wood, gravel, brick, or the like.

In one embodiment of the present disclosure, the first substrate and the second substrate may be the same material. The adhesive composition or adhesive product according to one embodiment may be used as a water-separable adhesive for labels, adhesive tapes, spray-type adhesives, dust removers, etc., and may be easily removed using water without damaging the adherend. Adhesive substrates, for example, packaging materials, wood, etc. may be easily recycled. In addition, when this composition or product is applied to agricultural chemicals and seed fields, there is an advantage that it can be easily removed with water after using the adhesive-containing composition, so that the application range can be broadened.

## ADVANTAGEOUS EFFECTS OF INVENTION

The adhesive composition of the present disclosure described above uses an edible material as a raw material and is biodegradable when released and has high adhesive strength. The substrate to which the adhesive composition is applied can be easily and completely removed from the adherend even in pure water, and thus, the adhesive composition is suitable for use as an eco-friendly adhesive. In addition, as a result of experimenting for skin irritation test and soil physical force, it was identified that the adhesive composition is non-toxic and non-irritating, and is excellent in stability.

## BRIEF DESCRIPTION OF DRAWINGS

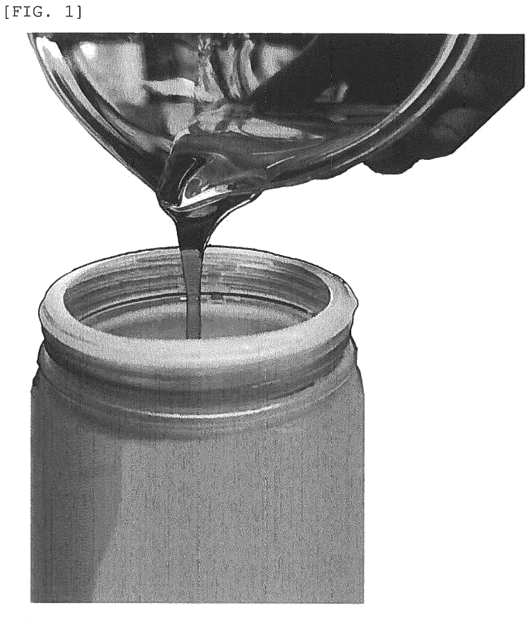

FIG. 1 is a photograph of a sample used for biodegradation of an adhesive composition of the present disclosure.

FIG. 2 is a photograph illustrating the skin administration range of the adhesive composition of the present disclosure used in the skin irritation experiment.

FIG. 3 is a photograph of a skin irritation experiment of the present disclosure. FIA. 3A is a photograph of the skin 24 hours after application (initial test), and FIG. 3B is a photograph of the skin 24 hours after application (confirmation test).

FIG. 4 is a photograph of a skin irritation experiment of the present disclosure. FIG. 4A is a photograph of the skin 72 hours after application (initial test), and FIG. 4B is a photograph of the skin 72 hours after application (confirmation test).

FIG. 5 is a product photograph illustrating a state in which the adhesive composition of the present disclosure is accommodated in a container, and a test for household chemical products subject to safety verification is conducted.

FIG. 6 shows the results of testing the biobase-carbon inclusion degree.

## DESCRIPTION OF EMBODIMENTS

The advantages and features of the present disclosure and methods of achieving them will be apparent from the embodiments that will be described in detail with reference to the accompanying drawings. It should be noted, however, that the present disclosure is not limited to the following embodiments, and may be implemented in various different forms. Rather the embodiments are provided so that this disclosure will be thorough and complete and will fully convey the scope of the present disclosure to those skilled in the technical field to which the present disclosure pertains. It is to be noted that the scope of the present disclosure is defined only by the claims. The detailed contents for carrying out the present disclosure will be described in detail with reference to the accompanying drawings below. Without regard to the drawings, like reference numerals refer to like elements, and the term "and/or" includes each and all combinations of one or more of the mentioned items.

Terms used in the specification are used to describe embodiments of the present disclosure and are not intended to limit the scope of the present disclosure. In the specification, the terms of a singular form may include plural forms unless otherwise specified. The expressions "comprise" and/or "comprising" used herein indicate existence of one or more other elements other than stated elements but do not exclude presence of additional elements.

Unless otherwise defined, all terms (including technical and scientific terms) used herein have the same meaning as commonly understood by those skilled in the technical field to which the present disclosure pertains. It will be further understood that terms, such as those defined in commonly used dictionaries, should not be interpreted in an idealized or overly formal sense unless expressly so defined herein.

Hereinafter, the embodiments of the present disclosure will be described in detail with reference to the accompanying examples. These examples are only for illustrating the present disclosure, and it will be apparent to those skilled in the pertinent art that the scope of the present disclosure is not to be construed as being limited by these examples.

### [Preparation Example 1] Preparation of Adhesive Composition

An adhesive composition was prepared using a wet blending method at a mixing ratio as shown in Table 1 below. Dextrin was selected as a saccharide compound and added into water heated from room temperature to 60°C, and stirred to form a mixture. When all of the dextrin is dissolved into a transparent liquid, glycerin, 1,2-hexanediol, ethylhexyl glycerin, and 1,3-butanediol are selected as polyol compounds, and polyol compounds were added to the mixture. The mixed solution was stirred to prepare an adhesive composition.

By adjusting the contents of dextrin, glycerin, 1,2-hexanediol, ethylhexyl glycerin, 1,3-butanediol, and water to be added, the adhesive compositions of the examples and the comparative examples as compared to the above examples according to the present disclosure were prepared, respectively.

[Table 1](unit: weight%)

| | Dextrin | Polyol compounds | | | | Solvent (water) |
|---|---|---|---|---|---|---|
| | | Glycerin | 1,2-hexanediol | ethylhexyl glycerin | 1,3-butanediol | |
| Example 1 | 60 | 1 | 2 | 0.5 | 6.5 | 30 |
| Example 2 | 50 | 1 | 2 | 0.5 | 6.5 | 40 |
| Example 3 | 70 | 1 | 2 | 0.5 | 6.5 | 20 |
| Example 4 | 60 | 0.5 | 1 | 0.25 | 3.25 | 35 |

(continued)

| | Dextrin | Polyol compounds | | | | Solvent (water) |
|---|---|---|---|---|---|---|
| | | Glycerin | 1,2-hexanediol | ethylhexyl glycerin | 1,3-butanediol | |
| Example 5 | 60 | 1.5 | 3 | 0.75 | 9.75 | 25 |
| Comparative Example 1 | 60 | 0.4 | 0.8 | 0.2 | 2.6 | 36 |
| Comparative Example 2 | 60 | 2 | 4 | 1 | 13 | 20 |
| Comparative Example 3 | 40 | 1 | 2 | 0.5 | 6.5 | 50 |
| Comparative Example 4 | 80 | 1 | 2 | 0.5 | 6.5 | 10 |

**[Experimental Example 1] Viscosity Evaluation**

The viscosity of the adhesive composition (Examples 1 to 5) prepared by the above method was measured using a BROOKFIELD DV2T viscometer and LV spindle No. 62 at a temperature of $25\pm1°C$ of the composition at 15 rpm. The viscosity of the composition was 1,000 cP.

**[Experimental Example 2] Adhesive Force Evaluation**

In order to evaluate the adhesive force of the adhesive composition prepared by the above method, it was measured according to KS M 3705, and an adhesion test was conducted on the MDF plywood substrate. The size of the substrate was W $2.5 \times$ L $10 \times$ T $0.2$ cm$^3$, and the adhesive area was 3.125 mm$^2$. The tester for testing the adhesive force of the specimen was COMETECH's model QC-513 (type D2), and a loadcell of 200 kgf was attached and measured at room temperature. Adhesion force was evaluated by tensile shear strength.

The test was conducted under the conditions and methods above, and the results are shown in Table 2.

[Table 2]

| | | Attachment process | | | | | |
|---|---|---|---|---|---|---|---|
| | | Day 4 | | Day 7 | | Day 14 | |
| | | Maximum load | Maximum stress | Maximum load | Maximum stress | Maximum load | Maximum stress |
| Examples | 1 | 41.603 | 16.641 | 29.213 | 11.685 | 59.526 | 23.810 |
| | 2 | 41.924 | 16.770 | 28.861 | 11.544 | 57.405 | 22.962 |
| | 3 | 42.436 | 16.974 | 27.843 | 11.137 | 51.262 | 20.505 |
| | 4 | 47.098 | 18.839 | 27.611 | 11.044 | 61.839 | 24.736 |
| | 5 | 46.280 | 18.512 | 27.293 | 10.917 | 58.030 | 23.212 |
| | Average | 43.868 | 17.547 | 28.164 | 11.266 | 57.612 | 23.045 |
| Comparative Examples | 1 | 26.578 | 10.631 | 31.790 | 12.716 | 25.232 | 10.093 |
| | 2 | 28.413 | 11.365 | 30.152 | 12.061 | 21.015 | 8.406 |
| | 3 | 30.269 | 12.108 | 31.864 | 12.746 | 21.253 | 8.501 |
| | 4 | 28.632 | 11.453 | 30.909 | 12.364 | 35.389 | 14.156 |
| | Average | 28.473 | 11.389 | 31.179 | 12.472 | 25.722 | 10.289 |
| * Substrate: MDF(wood)/Maximum load unit=kgf/Maximum stress unit=kgf/cm$^2$ | | | | | | | |

As a result, the adhesive compositions (Examples 1 to 5) according to the present disclosure exhibited an adhesive strength of an average load of 57 kgf and an average stress of 23 kgf/cm$^2$ at room temperature, which is a high level of adhesive force that cannot be torn off by human force. The adhesive composition of Examples 1 to 5 prepared by the present disclosure identified high adhesive force, compared to Comparative Examples 1 to 4. Referring to Comparative Example 4, the content of dextrin was 80% by weight, but there was no difference in effect from Example 3 including 70% by weight. Hence, when 70% by weight or more was included, it was difficult to expect an improvement in the effect compared to the amount added.

**[Experimental Example 3] Water separability test**

Water separability of the adhesive composition (Examples 1 to 5) of the present disclosure were evaluated. The method for evaluating water separability is as follows. Specimens were prepared by applying the adhesive composition of the present disclosure to MDF plywood and miniature bricks and attaching them.

After immersing the specimens in water, the time for complete separation of the specimens was measured to evaluate water separability. The evaluation results are shown in Table 3.

[Table 3]

|  | MDF plywood | Brick (Miniatures) |
|---|---|---|
| Example 1 | 1 hour and 57 minutes later | 12 minutes |
| Example 2 | 1 hour and 10 minutes later | 9 minutes |
| Example 3 | 1 hour and 50 minutes later | 6 minutes |
| Example 4 | 2 hours and 5 minutes later | 11 minutes |
| Example 5 | 2 hours and 10 minutes later | 15 minutes |

As a result, after immersing the MDF plywood and bricks applied with the adhesive composition of the examples in water, the adhesive composition of the present disclosure in each specimen was different for each example, but it was identified that complete water separation was achieved.

As can be understood from the results above, it was found that the adhesive composition according to the present disclosure has a viscosity and adhesive strength similar to those of a general commercial adhesive while including a natural component derived from nature. In addition, since it also has a property of being decomposed by water, it has an advantage that no separate chemical substance is used when the adhesive composition is removed. In other words, the adhesive composition according to the present disclosure is made of natural ingredients that are harmless to the human body, and the adhesive strength also secures the performance of general adhesives, it may be used for various purposes such as adhesives for children, slimes for children, adhesives for DIY assembly, miniature adhesives, diorama adhesives, bead craft for hobby, wood craft, beauty craft adhesives, medical adhesives, adhesives for beauty industry, and adhesives for environmental industry.

**[Experimental Example 4] Biodegradability**

The biodegradability of the adhesive composition (Example 1) of the present disclosure was evaluated by requesting Korea Testing & Research Institute (KTR). The test method used was OECD 301 A: 1992.

As a result of the experiment, it was identified that the biodegradability result of the present disclosure was 97.9% within 28 days.

**[Experimental Example 5] Carp acute toxicity test**

In order to evaluate the toxicity of the present disclosure, the test was conducted with reference to Chapter 3, Paragraph 3, 'Acute Toxicity Test for Fish' in the Notice No. 2020-46 'Regulations on Test Methods for Chemicals' of the National Institute of Environmental Research.

Specifically, 1 g of the adhesive composition (Example 1) of the present disclosure was weighed and placed in a test container, and then filled with fish breeding water to 10 L to prepare a test solution having a concentration of 100 mg/L. Based on the preliminary test results, it was carried out for 96 hours in the control group and the experimental group (100 mg/L in Example 1). The total number of carp used in the test was 10 for each test group, the total length of the carp was 3.1-4.0 cm, and the weight range was 0.40-0.77 g. The water temperature was 23.8-24.1°C, and the dissolved oxygen concentration was 77.7-97.8%. During the 96-hour exposure period, the pH of the control group and the experimental group (100 mg/L in Example 1) was 7.42 to 7.72. No difference was observed between the control and test solutions. As a result of observation of the state of the test solution during the test period, the control and set concentration of 100 mg/L test solution remained transparent for 96 hours.

The exposure method of this test was conducted in a static method without exchanging the test solution during the test period. For the test container, a glass water tank made of inert material was used, and the test container was covered with a cover to prevent evaporation of the test solution or the ingress of foreign substances during the test period.

Feeding was stopped during the exposure time, and air was gently supplied to the test solution. The state of the test solution was observed in the morning and afternoon at a 24-hour interval from the start date of exposure (0 hour) to the end date of the experiment (96 hours). The water temperature, pH, and dissolved oxygen concentration of the test solution were measured and recorded every 24 hours from the exposure start date (0 hour).

As observation items, toxic symptoms such as morphological abnormalities, swimming abnormalities, and bleeding and the number of deaths were observed and recorded at intervals of 3, 5, and 24 hours after exposure.

During the test period, the control group maintained a transparent state until the end of the test, but in the experimental group, the color of the solution was transparent at first, but it was observed that the solution became cloudy from 24 hours on. The test results are as follows.

[Table 4]

| Classification | | 0 hour | 3 hours | 5 hours | 24 hours | 48 hours | 72 hours | 96 hours |
|---|---|---|---|---|---|---|---|---|
| Number of lethal subjects | Control group | 0 | 0 | 0 | 0 | 0 | 0 | 0 |
| | Experimental group | 0 | 0 | 0 | 0 | 0 | 0 | 0 |
| Toxic reaction | Control group | Normal | Normal | Normal | Normal | Normal | Normal | Normal |
| | Experimental group | Normal | Normal | Normal | Normal | Normal | Normal | Normal |

As a result of the test, no lethal subjects or toxic symptoms were observed in the control group and the experimental group for 96 hours. It was identified that the 48-hour and 96-hour 50% lethal concentrations ($LC_{50}$) of the present disclosure were all >100 mg/L.

**[Experimental Example 6] Daphnia magna acute toxicity test**

In order to evaluate the toxicity of the present disclosure, the test was conducted with reference to Chapter 3, Paragraph 2, 'Acute Toxicity Test for Daphnia magna' in the Notice No. 2020-46 'Regulations on Test Methods for Chemicals' of the National Institute of Environmental Research.

Specifically, 0.1 g of the adhesive composition (Examples) of the present disclosure was placed in a test container with a capacity of 1 L, and a set concentration of 100 mg/L test solution was prepared by filling M4 medium up to a 1 L gauge mark. Based on the preliminary test results, it was carried out for 48 hours in the control group and the experimental group (100 mg/L in Example 1). The experiment was repeated 4 times with 5 Daphnia magna in each test group. The water temperature was 20.0-20.1°C, and the dissolved oxygen concentration was 7.46-8.51 mg/L. During the 48-hour exposure period, the pH of the control group and the experimental group (100 mg/L in Example 1) was 7.81 to 7.99. Swimming inhibition was observed at a 24-hour interval during the exposure period. During the test period, the control group maintained a transparent state until the end of the test, but in the experimental group, the color of the solution was transparent at first, but it was observed that the solution became cloudy from 24 hours on.

[Table 5]

| Classification | | 0 hour | 24 hours | 48 hours |
|---|---|---|---|---|
| Number of lethal subjects | Control group | 0 | 0 | 0 |
| | Experimental group | 0 | 0 | 0 |
| Toxic reaction | Control group | Normal | Normal | Normal |
| | Experimental group | Normal | Normal | Normal |

As a result of the test, no lethal subjects or toxic symptoms were observed in the control group and the experimental group for 48 hours. It was identified that the 48-hour 50% effective concentration ($EC_{50}$) of the present disclosure was all >100 mg/L (Table 5).

**[Experimental Example 7] Freshwater algae growth inhibition test**

In order to evaluate the toxicity of the present disclosure, the test was conducted with reference to Chapter 3, Paragraph 1, 'Freshwater Algae Growth Inhibition Test' in the Notice No. 2020-46 'Regulations on Test Methods for Chemicals' of the National Institute of Environmental Research.

Specifically, 0.1 g of the adhesive composition (Example) of the present disclosure was placed in a test container with a capacity of 1 L, and a set concentration of 100 mg/L test solution was prepared by filling an OECD algal medium up to a 1 L gauge mark. Freshwater algae (Pseudokirchneriella subcapitata) for each test group was inoculated at an initial concentration of $5 \times 10^3$ cell/ml, and based on the preliminary test results, the test was conducted for 72 hours in the control group and the experimental group (100 mg/L in Example 1). The test was repeated 6 times. During the test period, both the control group and the experimental group maintained a transparent state at first, but from 48 hours on, as the algae grew, they took on a light green color. During the exposure period, the pH of the control group and the experimental group (100 mg/L in Example 1) was 7.48 to 7.99, and the range of change was - 0.35 to -0.05, respectively. During the test period, the illuminance in the incubator was 5780 to 6640 Lux, and the temperature was kept constant at 22.5°C. The test results are as follows.

〖Table 6〗

| Classification | | Biomass (cell/ml) | | | | Exponential growth factor | Yield | Inhibition rate of yield (%) | Average specific growth rate | Inhibition rate of specific growth rate (%) |
|---|---|---|---|---|---|---|---|---|---|---|
| | | 0 hour | 24 hours | 48 hours | 72 hours | | | | | |
| Control group | First | 5000 | 18800 | 86300 | 245000 | 49.0 | 240000 | - | 1.297 | - |
| | Second | 5000 | 21300 | 90000 | 251300 | 50.3 | 246300 | | 1.306 | |
| | Third | 5000 | 22500 | 90000 | 253800 | 50.8 | 248800 | | 1.309 | |
| | Fourth | 5000 | 22500 | 86300 | 251300 | 50.3 | 246300 | | 1.306 | |
| | Fifth | 5000 | 20000 | 87500 | 258800 | 51.8 | 253800 | | 1.316 | |
| | Sixth | 5000 | 22500 | 90000 | 253800 | 50.8 | 248800 | | 1.309 | |

| | | | | | | | | | | |
|---|---|---|---|---|---|---|---|---|---|---|
| | Average | 5000 | 21267 | 88350 | 252333 | 50.5 | 247333 | | 1.307 | |
| Experimental group | First | 5000 | 22500 | 88800 | 256300 | 51.3 | 251300 | 0.2 | 1.312 | 0.0 |
| | Second | 5000 | 16300 | 91300 | 241300 | 48.3 | 236300 | | 1.292 | |
| | Third | 5000 | 23800 | 86300 | 261300 | 52.3 | 256300 | | 1.319 | |
| | 4차 | 5000 | 18800 | 90000 | 252500 | 50.5 | 247500 | | 1.307 | |
| | 5차 | 5000 | 22500 | 92500 | 247500 | 49.5 | 242500 | | 1.301 | |
| | 6차 | 5000 | 21300 | 88800 | 252500 | 50.5 | 247500 | | 1.307 | |
| | Average | 5000 | 20867 | 89617 | 251900 | 50.4 | 246900 | | 1.306 | |

1) Exponential growth factor = 72 hours biomass/0 hour biomass

2) Yield = 72 hours biomass - 0 hour biomass

3) Inhibition rate of yield = (Control yield - Experimental yield)/Control yield × 100

4) Average specific growth rate = In (72 hour biomass) - In (0 hour biomass) / 3 days

5) Inhibition rate of average specific growth rate = (Average specific growth rate in control group - Average specific growth rate in experimental group)/Average specific growth rate × 100

As a result of the test, the average biological growth rate for 72 hours was 50.5 times in the control group and 50.4 times in the experimental group, the inhibition rate of average specific growth rate of the experimental group was 0.0, and the inhibition rate of yield was 0.2. Accordingly, the 72-hour 50% effective concentration ($EC_{50}$) of the present disclosure was all >100 mg/L, identifying that there was no toxic effect on growth inhibition on algae (Table 6).

**[Experimental Example 8] Degree of Soil Pollution**

The degree of soil pollution of the adhesive composition (Example 1) of the present disclosure was evaluated by requesting the KTR. The experiment was conducted in accordance with the Notice No. 2018-53: 2018 (Soil Pollution Process Test Standard) of the National Institute of Environmental Research. As a result of the experiment, it was identified that the present disclosure did not detect any of phenol, benzene, toluene, and mercury (Table 7).

The degree of soil pollution of the adhesive composition (Example 1) of the present disclosure was evaluated by requesting the KTR. The experiment was conducted in accordance with the Notice No. 2018-53: 2018 (Soil Pollution Process Test Standard) of the National Institute of Environmental Research. As a result of the experiment, it was found that the present disclosure did not detect any of cadmium, cyanide, arsenic, organophosphorus compounds, xylene, trichloroethylene, tetrachloroethylene, ethylbenzene, 1,2-dichloroethane, phenol, benzene, toluene, and mercury (Table 7).

[Table 7]

| Test items | Results (mg/kg) |
|---|---|
| cadmium | Undetected |
| cyanide | Undetected |
| arsenic | Undetected |
| organophosphorus compounds | Undetected |
| xylene | Undetected |
| trichloroethylene | Undetected |
| tetrachloroethylene | Undetected |
| ethylbenzene | Undetected |
| 1,2-dichloroethane | Undetected |
| phenol | Undetected |
| benzene | Undetected |
| toluene | Undetected |
| mercury | Undetected |

**[Experimental Example 9] Skin Irritation Test**

In order to evaluate the acute skin irritation and corrosion of the adhesive composition (Example 1) of the present disclosure to Rabbit, the test substance was administered to the back for 4 hours, and then mortality, general symptoms, weight change, skin irritation, and corrosion were evaluated for 72 hours. As test animals, 3 males of Yac:NZW(KBL), Rabbit, SPF at 3 months of age were used, of which 1 was for initial test and 2 were for identification test.

1) Test method

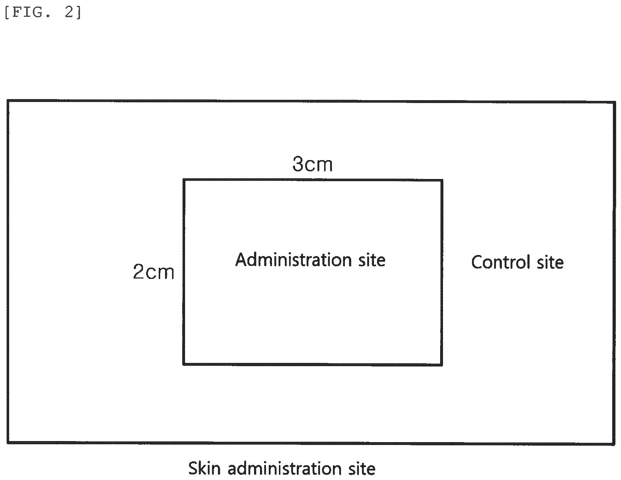

After hair removal [about $(15 \times 15)$ cm2] of the back about 24 hours before administration of the test substance, one administration compartment with an area of $[(2 \times 3)$ cm$^2]$ was separated and marked immediately before administration (see FIG. 2). After attaching 0.5 mL of the test substance to the administration site, it was fixed using a non-irritating tape (Tegaderm, 3M) and an elastic bandage (Coban, 3M). The adjacent part other than the test substance administration site was used as a control site. After removing the patch of the test substance, the administration site was gently washed with a washing material (sterile distilled water).
First, as an initial test, three patches of test substance were sequentially administered to one experimental animal at different sites. The three patches of test substance were applied for 3 minutes, 1 hour and 4 hours, respectively (skin irritation/corrosion test). Since no corrosiveness was observed until 4 hours of application during the initial test, a verification test was performed (skin irritation test) using two additional experimental animals. Each animal was exposed to one patch of test substance for 4 hours.
In the case of the initial test, skin reactions were observed sequentially (3 minutes, 1 hour, 4 hours) after the patch was removed and irritation and corrosion were observed. Skin reactions were observed at 1, 24, 48 and 72 hours after patch removal for 4 hours. In the case of the verification test, skin reactions were observed up to 1, 24, 48 and 72 hours after patch removal for 4 hours.
The evaluation of the skin reaction was recorded by scoring the irritation according to the table below at 1, 24, 48 and 72 hours after the removal of the patch of the test substance, and the skin reaction mean score was calculated.

[Table 8]

| Erythema and crust formation | | | Edema formation | |
|---|---|---|---|---|
| Reaction | Grade | | Reaction | Grade |
| No erythema at all | 0 | | No edema at all | 0 |
| very mild erythema (nearly discernible with the naked eye) | 1 | | very mild edema (nearly discernible with the naked eye) | 1 |
| Clear erythema | 2 | | Mild edema (clear swelling to distinguish exposed areas) | 2 |
| Moderate to severe erythema | 3 | | Moderate edema (in case of swelling of about 1 mm) | 3 |
| Severe erythema and crust formation to the extent that erythema cannot be evaluated | 4 | | Severe edema (swelling 1 mm or more and extending beyond the exposed area) | 4 |

2) Experimental results

During the experimental period, no animal deaths or abnormal symptoms related to the administration of the test substance were observed.

As a result of body weight measurement, the body weight 72 hours after administration was lower than the administration body weight. In addition, normal weight gain was observed in all animals.

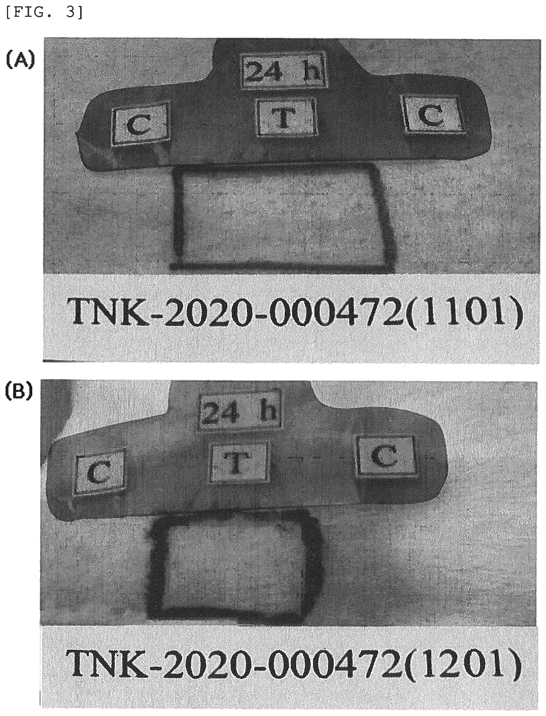

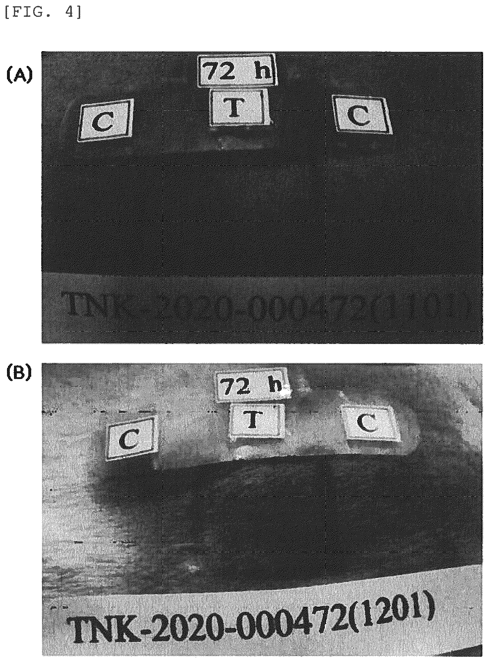

As a result of observing the site of administration of the test substance, irritation and corrosion were not observed in all animals (*see* FIGS. 3 to 4). Skin reaction mean score was calculated as "0.0" in all animals.

[Table 9]

| | Experimental subjects | Erythema and crust formation | Edema formation |
|---|---|---|---|
| Initial test | 1101 | 0 | 0 |
| Verification test | 1201 | 0 | 0 |
| | 1202 | 0 | 0 |

From the above results, it was identified that in the skin irritation and corrosion test for rabbits, the present disclosure did not cause skin irritation and corrosion, and thus was not classified as a Hazard class in the classification according to the Globally Harmonized System of Classification and Labeling of Chemicals (GHS).

**[Experimental Example 10] Test for Household Chemical Products subject to Safety Verification**

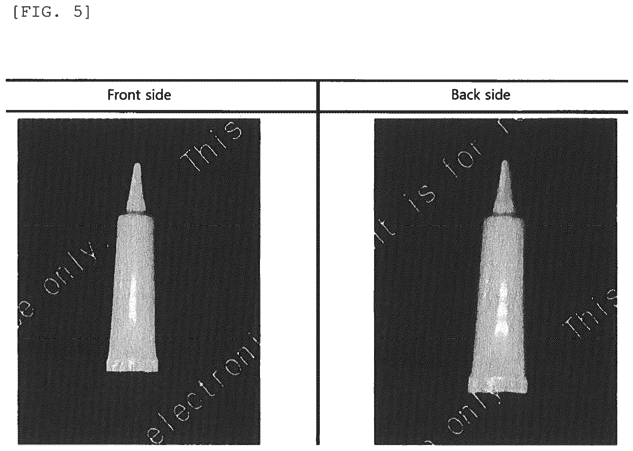

By requesting the Korea Conformity Laboratories, it was tested whether the adhesive composition and the container for accommodating the composition of the present disclosure (see FIG. 5) were safe.

The inspection method is related to i) designation of household chemical products subject to safety verification and safety and labeling standards (Ministry of Environment Notification No. 2020-117, June 5, 2020), and ii) regulations on the standards and methods for testing and inspection of household chemical products subject to safety verification (Notice No. 2019-70 of the National Institute of Environmental Research, December 31, 2019) (environmental conditions: temperature (25+5)°C, humidity (50110)% R.H.).

The results are as follows. In other words, as a result of the test, it was determined that the adhesive composition and the container for accommodating the composition of the present disclosure were suitable for use as household chemical products.

[Table 10] Summary of test results

| Classification of inspection | Determination | Unsuitability | Remarks | Overall determination |
|---|---|---|---|---|
| Verification results of chemical substances | Suitable | | | Suitable |
| Verification results of container, packaging and weight | Suitable | | | |
| Verification results of child protective packaging | Suitable | | | |

[Table 11] Verification results of chemical substances

| Serial Nos. | Verification items | Unit | Verification standards | Verification results | Determination | Remarks |
|---|---|---|---|---|---|---|
| 1 | Formaldehyde | mg/kg | 100 or less | Undetected | Suitable | Content-restricted substances (containing) |
| 2 | Acetaldehyde | mg/kg | 1,000 or less | Undetected | Suitable | Content-restricted substances (containing) |
| 3 | Chloroform | mg/kg | 1,000 or less | Undetected | Suitable | Content-restricted substances (containing) |
| 4 | Toluene | mg/kg | 1.000 or less | Undetected | Suitable | Content-restricted substances (containing) |
| 5 | Dimethylformamide | mg/kg | 1,000 or less | Undetected | Suitable | Content-restricted substances (containing) |
| 6 | Dichloromethane | mg/kg | 800 or less | Undetected | Suitable | Content-restricted substances (containing) |
| 7 | Arsenic | mg/kg | 20 or less | Undetected | Suitable | Content-restricted substances (containing) |
| 8 | Benzene | mg/kg | 60 or less | Undetected | Suitable | Content-restricted substances (containing) |
| 9 | Xylene | mg/kg | 1,000 or less | Undetected | Suitable | Content-restricted substances (containing) |
| 10 | Prohibited substances | - | Not containing | Not containing | Suitable | Not containing • Non-use |
| 11 | Restricted substances (substances used) | - | Non-use | Non-use | Suitable | Not containing • Non-use |

[Table 12] Verification results of container, packaging and weight

| Serial Nos. | Verification items | Verification standards | Verification results | Determination | Remarks |
|---|---|---|---|---|---|
| 1 | Appearance | The appearance should be clean and there should be no dangerous parts such as sharp parts. | Not observed | Suitable | |
| | | The structure should not be deformed or damaged, and the contents should not leak. | Not observed | Suitable | |
| 2 | Strength and leakage | When performing a container strength test, there should be no damage to the container, such as a cap or body, and the contents of the product should not leak out. | Not observed | Suitable | |
| | | When performing a leak test, the contents of the product should not leak out. | Not observed | Suitable | |
| 3 | Weight/Capacity/Pieces | Allowable deficit: 9%(24.6mL) | 34.0mL | Suitable | |
| | | | 34.0mL | Suitable | |
| | | | 35.OmL | Suitable | |

[Table 13] Verification results of child protective packaging

| Serial Nos. | Verification items | Verification standards | Verification results | Determination | Remarks |
|---|---|---|---|---|---|
| 1 | Child protective packaging | Safety standards for child protective packaging (Based on essential items) | Not applicable | - | Non-target |
| 2 | Child protective packaging | Safety standards for child protective packaging (Applicable substance standards) | Not applicable | Suitable | Verifying confirmation application form of household chemical products subject to safety verification |

**[Experimental Example 11] Test on Degree of Inclusion of Biobase-Carbon**

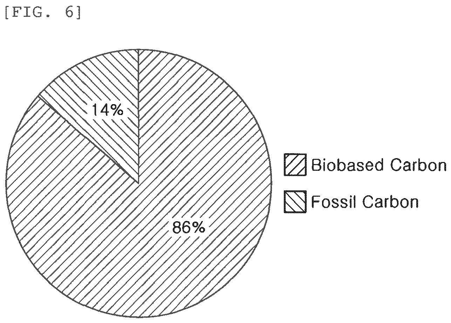

The ratio of the naturally derived carbon component and the fossil fuel-based carbon component contained in the adhesive composition of the present disclosure was investigated using the radiocarbon isotope (C14) as a result of the request of the American Beta Analytic Institute (ISO/IEC 17025 overseas authorized testing institute). As a result, it was investigated that the adhesive composition of the present disclosure contained 86% of a naturally derived carbon component (see FIG. 6).

The test result has the same effect as the test report issued by 100 accreditation organizations, including Korea's KOLAS, 103 countries that have joined the International Laboratory Accreditation Cooperation (ILAC).

Hereinbefore, the present disclosure has been described with reference to the embodiments. It will be understood by those having ordinary skill in the technical field to which the present disclosure pertains that the present disclosure may be embodied in various other specific forms without departing from the technical ideas or essential characteristics thereof. Therefore, the disclosed embodiments should be considered in an illustrative rather than a restrictive perspective in all aspects.

**Claims**

**1.** An eco-friendly adhesive composition, comprising:

a saccharide compound;

a polyol compound; and

a solvent for dispersing the saccharide compound and the polyol compound.

2. The eco-friendly adhesive composition of claim 1, wherein the saccharide compound is a monosaccharide or a polysaccharide.

3. The eco-friendly adhesive composition of claim 2, wherein the monosaccharide is at least one selected from the group consisting of etythrose, threose, ribose, ribulose, xylose, xylulose, lyxose, allose, altrose, fructose, galactose, glucose, gulose, idose, mannose, sorbose, talose, tagatose, sedoheptulose, and mannoheptulose.

4. The eco-friendly adhesive composition of claim 2, wherein the polysaccharide is at least one selected from the group consisting of sucrose, glucose, maltose, lactose, trehalose, turanose, cellobiose, raffinose, melezitose, maltotriose, acarbose, stachyose, fructooligosaccharide, galactooligosaccharide, cellulose, dextrin, and glycogen.

5. The eco-friendly adhesive composition of claim 1, wherein the polyol compound is at least one selected from the group consisting of 1,2-hexanediol, 1,2-octanediol, 1,2-decanediol, 1,6-hexanediol, 1,8-octanediol, 1,3-butanediol, 4,4'-dihydroxyphenylpropane, 4,4'-dihydroxymethylmethane, diethylene glycol, triethylene glycol, polyethylene glycol (PEG), dipropylene glycol, polytetramethylene glycol (PTMG), polypropylene glycol (PPG), 1,4-cyclohexanedimethanol, 1,4-cyclohexanediol, glycerin, ethylhexylglycerin, and sorbitol.

6. The eco-friendly adhesive composition of claim 1, wherein the adhesive composition includes 50 to 70% by weight of the saccharide compound, 5 to 15% by weight of the polyol compound, and a balance of the solvent.

7. An eco-friendly adhesive produced from the adhesive composition according to any one of claims 1 to 6.

8. The eco-friendly adhesive of claim 7, wherein the eco-friendly adhesive is in the form of hydrogels, mats, films or patches.

9. A method for producing an eco-friendly adhesive composition, the method for producing the adhesive composition comprising:

S1) adding a saccharide compound to a solvent and stirring to form a mixture; and

S2) mixing a polyol compound with the first mixture to form an adhesive composition.

10. The method of claim 9, wherein the saccharide compound is a monosaccharide or a polysaccharide.

11. The method of claim 10, wherein the monosaccharide is at least one selected from the group consisting of etythrose, threose, ribose, ribulose, xylose, xylulose, lyxose, allose, altrose, fructose, galactose, glucose, gulose, idose, mannose, sorbose, talose, tagatose, sedoheptulose, and mannoheptulose.

12. The method of claim 10, wherein the polysaccharide is at least one selected from the group consisting of sucrose, glucose, maltose, lactose, trehalose, turanose, cellobiose, raffinose, melezitose, maltotriose, acarbose, stachyose, fructooligosaccharide, galactooligosaccharide, cellulose, dextrin, and glycogen.

13. The method of claim 9, wherein the polyol compound is at least one selected from the group consisting of 1,2-hexanediol, 1,2-octanediol, 1,2-decanediol, 1,6-hexanediol, 1,8-octanediol, 1,3-butanediol, 4,4'-dihydroxyphenylpropane, 4,4'-dihydroxymethylmethane, diethylene glycol, triethylene glycol, polyethylene glycol (PEG), dipropylene glycol, polytetramethylene glycol (PTMG), polypropylene glycol (PPG), 1,4-cyclohexanedimethanol, 1,4-cyclohexanediol, glycerin, ethylhexylglycerin, and sorbitol.

[FIG. 1]

[FIG. 2]

3cm

2cm | Administration site | Control site

Skin administration site

[FIG. 3]

(A)

TNK-2020-000472(1101)

(B)

TNK-2020-000472(1201)

[FIG. 4]

[FIG. 5]

| Front side | Back side |
|:----------:|:---------:|
| | |

[FIG. 6]

14%

☑ Biobased Carbon

☒ Fossil Carbon

86%

## INTERNATIONAL SEARCH REPORT

| International application No. |
|---|
| **PCT/KR2021/007052** |

**A.  CLASSIFICATION OF SUBJECT MATTER**

**C09J 103/02**(2006.01)i; **C09J 11/00**(2006.01)i; **C08K 5/05**(2006.01)i

According to International Patent Classification (IPC) or to both national classification and IPC

**B.  FIELDS SEARCHED**

Minimum documentation searched (classification system followed by classification symbols)

C09J 103/02(2006.01); C08G 18/08(2006.01); C08G 18/42(2006.01); C08K 5/09(2006.01); C09J 103/00(2006.01); C09J 11/04(2006.01); C09J 193/00(2006.01); C09J 4/02(2006.01); C09J 7/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 친환경 접착제 조성물(eco-friendly adhesive composition), 당류 화합물(sugar compound), 폴리올 화합물(polyol compound), 글리세린(glycerin), 덱스트린(dextrin), 폴리에틸렌글리콜(polyethylene glycol)

**C.  DOCUMENTS CONSIDERED TO BE RELEVANT**

| Category* | Citation of document, with indication, where appropriate, of the relevant passages | Relevant to claim No. |
|---|---|---|
| X | KR 10-2007-0008464 A (SAMYANG GENEX CORPORATION) 17 January 2007 (2007-01-17) <br> See abstract; paragraphs [0037] and [0076]; and claims 1, 2, 8 and 10. | 1-13 |
| X | KR 10-2017-0065487 A (UHU GMBH & CO. KG) 13 June 2017 (2017-06-13) <br> See paragraphs [0009] and [0013]; and claims 1, 4 and 7. | 1-13 |
| A | KR 10-2016-0115164 A (SEOL, Heeseok) 06 October 2016 (2016-10-06) <br> See entire document. | 1-13 |
| A | KR 10-1804939 B1 (DAESANG CORPORATION) 05 December 2017 (2017-12-05) <br> See entire document. | 1-13 |
| A | KR 10-2011-0098462 A (INATURE CO., LTD.) 01 September 2011 (2011-09-01) <br> See entire document. | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 September 2021** | **07 September 2021** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

<table>
<thead>
<tr><th colspan="2">INTERNATIONAL SEARCH REPORT<br>Information on patent family members</th><th colspan="2">International application No.<br>**PCT/KR2021/007052**</th></tr>
<tr><th>Patent document<br>cited in search report</th><th>Publication date<br>(day/month/year)</th><th>Patent family member(s)</th><th>Publication date<br>(day/month/year)</th></tr>
</thead>
<tbody>
<tr><td>KR   10-2007-0008464   A</td><td>17 January 2007</td><td>KR      10-0790482   B1</td><td>02 January 2008</td></tr>
<tr><td>KR   10-2017-0065487   A</td><td>13 June 2017</td><td>US     2017-0226393   A1</td><td>10 August 2017</td></tr>
<tr><td>KR   10-2016-0115164   A</td><td>06 October 2016</td><td>None</td><td></td></tr>
<tr><td>KR       10-1804939   B1</td><td>05 December 2017</td><td>None</td><td></td></tr>
<tr><td>KR   10-2011-0098462   A</td><td>01 September 2011</td><td>KR      10-1146146   B1</td><td>16 May 2012</td></tr>
</tbody>
</table>

Form PCT/ISA/210 (patent family annex) (July 2019)